# EUROPEAN PATENT APPLICATION

(11) **EP 4 621 558 A1**
(43) Date of publication of application: **24.09.2025**
(21) Application number: 25165448.9
(22) Date of filing: 21.03.2025
(51) Int. Cl.: G06F 8/61, G06F 9/445, G06F 9/451

(54) **SCREEN INPUT CONTROL METHOD AND SYSTEM, AND VEHICLE**

(30) Priority: 22.03.2024 CN 202410342156
(71) Applicant: BYD Company Limited, Shenzhen, Guangdong 518118 (CN)
(72) Inventor: CHEN, Gang, Shenzhen, 518118 (CN); YANG, Dongsheng, Shenzhen, 518118 (CN); SUN, Shicong, Shenzhen, 518118 (CN); NIU, Leilei, Shenzhen, 518118 (CN); ZHANG, Zhenbang, Shenzhen, 518118 (CN)
(74) Representative: Mathys & Squire

(57) **Abstract**

The present disclosure relates to a screen input control method and system, and a vehicle, the method is applied to a system including at least two screens, and the method includes: creating a management service resource pool, the management service resource pool always including at least one unused input method management service; and obtaining the unused input method management service from the management service resource pool when an input control of a screen is triggered, and allocating the unused input method management service to the screen, and marking the input method management service as used, so as to enable an input method of the screen. The present disclosure has an effect of reducing memory occupation of the input method management service, and improving user experience.

## Description

### FIELD

The present disclosure relates to the technical field of screen input, and specifically, to a screen input control method and system, and a vehicle.

### BACKGROUND

At present, with the development of the vehicle industry, vehicle cabins are undergoing unprecedented changes. A multimedia intelligent cabin has gradually replaced a traditional cabin. Functions of the intelligent cabin are becoming increasingly complex, and there are multiple screens in the cabin. In terms of costs and chip performance, most of these screens are driven by one host and one system. As there are more and more screens in the vehicle, input is simultaneously performed on multiple screens by using an input method.

In a related technology, input can be performed on multiple screens at the same time. However, for a system with a large quantity of screens, a background input method management service is installed in advance for each screen, and too many new background management services are added, resulting in a long startup time, and high background memory usage, leading to a poor user experience.

### SUMMARY

The present disclosure is proposed to resolve the foregoing problem. According to an aspect of the present disclosure, a screen input control method is provided, applied to a system including at least two screens, and the method includes: creating a management service resource pool, the management service resource pool always including at least one unused input method management service; and obtaining the unused input method management service from the management service resource pool when an input control of a screen is triggered, and allocating the unused input method management service to the screen, so as to enable an input method of the screen.

For example, after obtaining the unused input method management service from the management service resource pool when the input control of the screen is triggered, and allocating the unused input method management service to the screen, the method further includes: marking the input method management service as used; and adding an unused input method management service to the management service resource pool to be used for a screen, in the at least two screens, on which a next input control is triggered.

For example, the method further includes: after input based on the input method is completed, re-marking the input method management service marked as used to unused, and recycling the input method management service into the management service resource pool.

For example, enabling the input method of the screen includes: invoking the input method of the screen based on the input method management service marked as used, and transferring an input channel to the input method to enable the input method.

For example, before creating the management service resource pool, the method further includes: downloading an input method installation package and storing the input method installation package into the system; and parsing the input method installation package by using a package management service, to obtain an input method parsed package corresponding to each screen, and allocating a different package name to each input method parsed package; and invoking the input method of the screen based on the input method management service marked as used includes: invoking an input method corresponding to a corresponding screen based on the package name.

For example, when a screen is newly added to the system, the method further includes: parsing the input method installation package by using the package management service, to obtain an input method parsed package corresponding to the newly added screen, and allocating a new package name to the input method parsed package corresponding to the newly added screen.

For example, before the input based on the input method is completed, the method further includes: performing a vocabulary update on the input method.

For example, performing the vocabulary update on the input method includes: obtaining a candidate word of the input method; obtaining a fused vocabulary from storage space shared by all screens; and fusing the candidate word with the fused vocabulary to obtain a candidate word update result, the candidate word update result being stored into the storage space to update the fused vocabulary.

For example, performing the vocabulary update on the input method further includes: obtaining a quantity of input times of the candidate word and a quantity of input times of the fused vocabulary; obtaining a word frequency of a candidate word in the candidate word update result based on the quantity of input times of the candidate word and the quantity of input times of the fused vocabulary; and setting a priority for the candidate word in the vocabulary update result based on the word frequency, different priorities corresponding to different recommendation sequences.

For example, before enabling the input method, the method further includes: selecting an input method from at least two input methods based on user input to enable.

For example, selecting the input method to enable includes: obtaining configuration information of the at least two input methods; and selecting, based on the configuration information, an input method specified by the user input.

For example, the screen includes a physical screen and/or a virtual screen, where the virtual screen includes a projected screen and/or a shared screen.

According to another aspect of the present disclosure, a screen input control system is provided, where the system includes a memory and a processor, the memory storing a computer program, and when the computer program is run, the processor being enabled to perform the foregoing screen input control method.

According to still another aspect of the present disclosure, a computer readable storage medium is provided, where the computer readable storage medium stores a computer program, the computer program causing a processor to perform the foregoing screen input control method when being run by the processor.

According to yet another aspect of the present disclosure, a vehicle is provided, and the foregoing screen input control system is provided on the vehicle.

In the screen input control method in the present disclosure, when input is performed on multiple screens, an input method management service is managed by using a management service resource pool. The quantity of input method management services is dynamic and not bound to the quantity of screens. When input needs to be performed on a screen, a corresponding input method management service becomes a used state, so as to enable an input method. In addition, one unused input method management service is always maintained in the resource pool. When the system starts, not all input method management services need to be enabled, which reduces memory occupation and system lag, and improves user experience.

### BRIEF DESCRIPTION OF THE DRAWINGS

By describing in more detail the embodiments of the present disclosure with reference to the accompanying drawings, the foregoing and other obj ects, features, and advantages of the present disclosure will become clearer. The accompanying drawings are used to provide a further understanding of the embodiments of the present disclosure, constitute a part of the specification, and are used together with the embodiments of the present disclosure to explain the present disclosure, which does not constitute a limitation on the present disclosure. In the accompanying drawings, the same reference numerals typically represent the same component or step.
FIG. 1 shows a flowchart of a screen input control method according to an embodiment of the present disclosure.
FIG. 2 shows a block diagram of a screen input control process according to an embodiment of the present disclosure.
FIG. 3 shows a block diagram of multi-input method control according to an embodiment of the present disclosure.
FIG. 4 shows a block diagram of a process of setting a multi-screen input method according to an embodiment of the present disclosure.
FIG. 5 shows a block diagram of a vocabulary update process of different input methods according to an embodiment of the present disclosure.

### DETAILED DESCRIPTION

To make the objectives, technical solutions, and advantages of the present disclosure clearer, the following describes in detail the example embodiments according to the present disclosure with reference to the accompanying drawings. Clearly, the described embodiments are merely some but not all of the embodiments of the present disclosure. It should be understood that, the present disclosure is not limited by the example embodiments described herein. Based on the embodiments of the present disclosure described in the present disclosure, all other embodiments obtained by a person skilled in the art without creative efforts fall within the protection scope of the present disclosure.

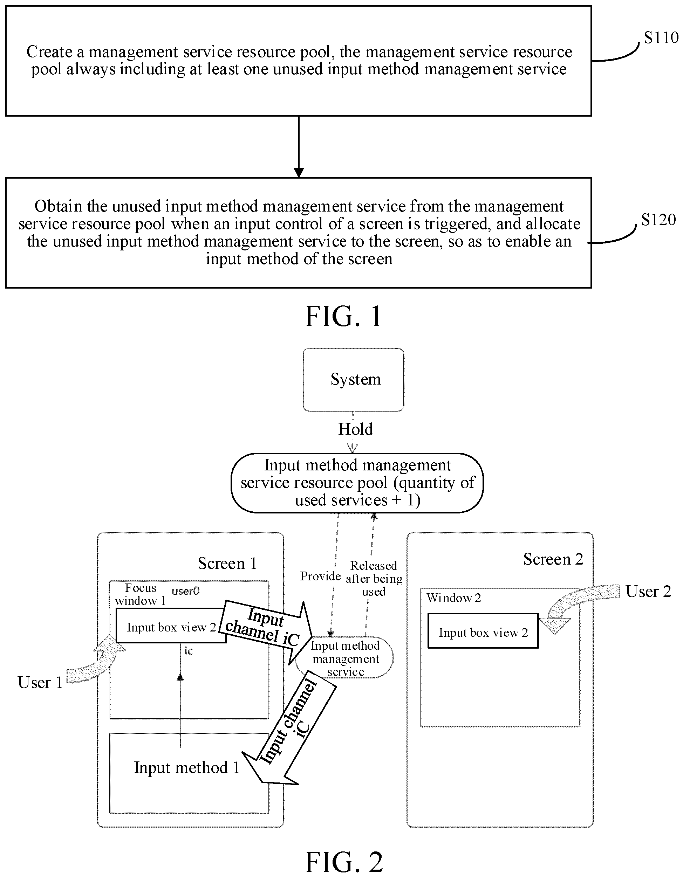

As shown in FIG. 1, an embodiment of the present disclosure provides a screen control method, applied to a system including at least two screens, where the method includes the following steps:

S110. A management service resource pool is created, the management service resource pool always including at least one unused input method management service.

S120. The unused input method management service is obtained from the management service resource pool when an input control of a screen is triggered, and the unused input method management service is allocated to the screen, so as to enable an input method of the screen.

In the screen input control method in the present disclosure, when input is performed on multiple screens, an input method management service is managed by using a management service resource pool. A quantity of input method management services is dynamic rather than bound to a quantity of screens. When input needs to be performed on a screen, a corresponding input method management service becomes a used state, so as to enable an input method. In addition, one unused input method management service is always maintained in the resource pool. When the system starts, not all input method management services need to be enabled, which reduces memory occupation and system lag, and improves user experience.

For example, the foregoing screen may be a physical screen, may be a virtual screen, or may include both a physical screen and a virtual screen, where the virtual screen includes a projected screen and/or a shared screen.

For example, the method in the present disclosure further includes the following steps:
S130. After an unused input method management service is obtained from the management service resource pool and allocated to the screen, the input method management service is marked as used; and an unused input method management service is added to the management service resource pool to be used for a screen, in the at least two screens, on which a next input control is triggered.
S140. After input based on the input method is completed, the input method management service marked as used is re-marked as unused, and the input method management service is recycled into the management service resource pool.

Based on this, in the method of the present disclosure, when input needs to be performed on a screen, a corresponding input method management service becomes a used state to enable an input method, and then a new unused input method management service is created to be used for another to-be-triggered screen. After input of the input method is completed, the input method management service marked as used is marked as unused and recycled, so that one unused input method management service is always maintained in a resource pool, thereby reducing memory occupation and lag.

The following separately describes the foregoing steps. Step S110: Create a management service resource pool, the management service resource pool always including one unused input method management service.

FIG. 2 is a block diagram of a screen input control process according to an embodiment of the present disclosure. When a system starts, a management service resource pool is created, the management service resource pool is used to manage an input method management service, and one unused input method management service is always maintained in the management service resource pool, that is, a quantity of input method management services is always a quantity of used services + 1.

Step S120: The unused input method management service is obtained from the management service resource pool when an input control of a screen is triggered, and the unused input method management service is allocated to the screen, and the input method management service is marked as used, so as to enable an input method of the screen. As shown in FIG. 2, a quantity of input method management services is dynamic, and only one unused input method management service is maintained in the management service resource pool. When an input control of the screen is triggered, an input method management service is obtained from the management service resource pool and marked as used.

Specifically, enabling the input method of the screen includes: invoking the input method of the screen based on the input method management service marked as used, and transferring an input channel to the input method to enable the input method. It should be noted that, an input method file of the screen is stored in the system. After setting, the input method management service invokes the input method. Only after the input channel is transferred to the input method, the input method can be enabled. After the input method is enabled, the user may perform input at a corresponding position on the screen based on the input method. The input control is a user interface element that allows the user to input data. These controls may include a text box, a drop-down list, a check box, a radio button, and the like. The input control is typically used to collect user input data and send the data to a server or store it on a local computer.

The input box view in FIG. 2 is a type of input control. In addition to the input box, the input control may further include a drop-down box, a selection box, and the like. For example, the method further includes: determining, based on the input method management service marked as used, whether the input method needs to be enabled, where for example, if the input box in the input control is triggered, it may be determined that the input method needs to be enabled; and if the drop-down box and the selection box are triggered, it is determined that the input method does not need to be enabled (because input is not required to be performed by using the input method, and input can be completed by clicking); and re-marking the input method management service as unused and recycling the input method management service into the management service resource pool.

For the foregoing step S130, an unused input method management service is added to the management service resource pool to be used for a screen, in the at least two screens, on which a next input control is triggered. If an input control of another screen is triggered in a process of using an input method of one screen, another screen also needs to invoke an input method by using the input method management service for input (the input method may be the same as or different from that of the first screen). Therefore, an unused input method management service needs to be added by using the management service resource pool, and the management service is applied to a next triggered screen.

Step S140: After input based on the input method is completed, the input method management service marked as used is re-marked as unused, and the input method management service is recycled into the management service resource pool. After input of an input method of a screen is completed, the used input method management service is re-marked as unused and recycled. If there is more than one unused input method management service in the management service resource pool after recycling, a redundant input method management service is to be deleted, so that at most one unused input method management service exists in the management service resource pool. Dynamic processing of the input method management service is implemented, and excessive memory occupation is not easy to occur. Compared with a manner in which one input method management service needs to be configured for each screen when a system is started in a related technology, in the solution of the present disclosure, it is less likely that lag or long-time startup wait occurs, thereby improving user experience. For manufacturers, costs can also be properly controlled.

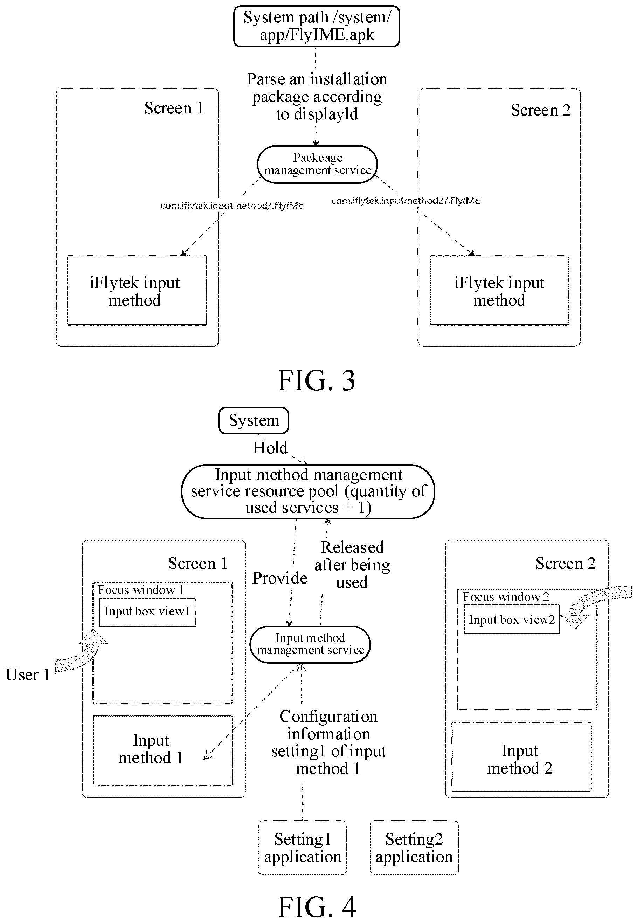

FIG. 3 is a block diagram of multi-input method control according to an embodiment of the present disclosure. It should be noted that, Input methods of different screens shown in FIG. 3 are a same input method. Before the input method is enabled, a corresponding input method installation package needs to be downloaded. After the installation package is downloaded, the installation package is stored in a storage path of the system. For example, the storage path of the installation package in the system may be /system/app/iFlyIME.apk. Then, the input method installation package is parsed by using a package management service, to obtain an input method parsed package corresponding to each screen, and a different package name is allocated to each input method parsed package. Invoking the input method of the screen based on the input method management service marked as used includes: invoking an input method corresponding to a corresponding screen based on the package name. That is, when the input method of the screen needs to be invoked by using the input method management service to perform input, the input method needs to be invoked according to the package name. As shown in FIG. 3, generally, when the package management service parses the same input method to obtain the input method parsing package, a different package name is directly allocated to each screen, thereby implementing enabling of the input method and transfer of the input channel.

For example, if a screen is newly added to the system, the method further includes: parsing the input method installation package by using the package management service, to obtain an input method parsed package corresponding to the newly added screen, and allocating a new package name to the input method parsed package corresponding to the newly added screen. That is, it needs to be ensured that package names of input method parsed packages corresponding to different screens are different. In this way, the input method management service can find the parsed package corresponding to the screen at the time of invoking. The newly added screen may be a physical screen or a virtual screen. When the user uses a projected screen or a shared screen, it may be considered as a newly added screen. The management service resource pool may provide a new unused input method management service for the newly added screen, so as to perform input.

As shown in FIG. 3, although input methods of the two screens are the same, and installation packages of the input methods are also the same, because the package management service allocates different package names, for example, package names of parsed packages corresponding to the two screens may be respectively: com.iflytek.inputmethod/.FlyIME and com.iflytek.inputmethod2/.FlyIME. Then, when the input method management service enables the input method of the screen 2, a parsed package corresponding to the screen 1 is not to be invoked because the package names are the same. In addition, if input methods of different screens are different, package names of input method parsed packages obtained by using installation packages are naturally different, and the foregoing task of allocating a new package name does not need to be performed.

FIG. 4 is a block diagram of a process of setting a multi-screen input method according to an embodiment of the present disclosure. For different screens, different input methods may be used. The method further includes setting the input method of the screen. Specifically, before the input method is enabled, the method further includes: selecting an input method from at least two input methods based on user input to enable. During selection, configuration information of the at least two input methods is obtained, and the input method specified by the user input is selected based on the configuration information. The user herein may be considered as a user who is performing an operation on a corresponding screen.

As shown in FIG. 4, the input method management service is further used to set the input method of the screen. The management service resource pool provides the input method management service, and obtains setting (configuration information) of the at least two input methods by using the input method management service. After the user specifies an input method of the current screen, the input method management service may select a specified input method (for example, iFlytek input method or Baidu input method) based on the configuration information. After selection is completed, the input method already selected is enabled for input when the input method of the screen is enabled by the input method management service next time.

For example, before the input based on the input method is completed, the method further includes: performing a vocabulary update on the input method. Specifically, the update manner is: obtaining a candidate word of the input method; obtaining a fused vocabulary from storage space shared by all screens; and fusing the candidate word with the fused vocabulary to obtain a candidate word update result, the candidate word update result being stored into the storage space to update the fused vocabulary. Further, a quantity of input times of the candidate word and a quantity of input times of the fused vocabulary are obtained; a word frequency of a candidate word in the candidate word update result is obtained based on the quantity of input times of the candidate word and the quantity of input times of the fused vocabulary; and a priority is set for the candidate word in the vocabulary update result based on the word frequency, different priorities corresponding to different recommendation sequences. A vocabulary with a higher priority is more easily recommended to the user.

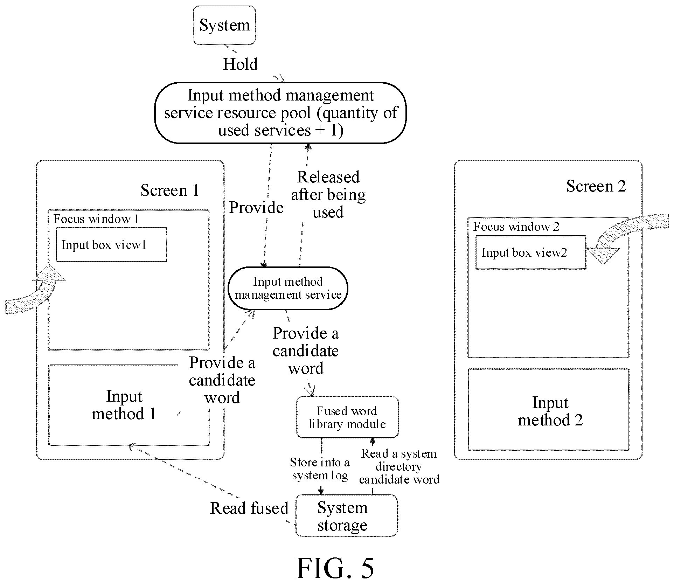

FIG. 5 is a block diagram of a vocabulary update process of different input methods according to an embodiment of the present disclosure. It may be understood that, in an application environment of multiple input methods in a single system, especially different types of input methods (for example, Baidu input method and Sogou input method), user information (for example, information such as a candidate word) is independently stored. In this case, a candidate word library of each screen is an information island. In different screens, the user needs to repeatedly enter a same high-frequency word, which affects user experience. For input methods of a same type, they can be shared easily through a cloud account. Details are not described herein. The solutions of the present disclosure are mainly for updating vocabularies of different types of input methods.

As shown in FIG. 5, when a vocabulary update is performed, a candidate word of an input method is obtained by using the input method management service, and a fused vocabulary is obtained from the storage space. This process may be implemented by using a fused word library module, and a fused vocabulary is obtained from system storage by using the fused word library module. Then, fusion is implemented by using the fused word library module to obtain a candidate word update result. Then, the fused word library module stores the candidate word update result into the storage space, so as to update the fused vocabulary. In this way, when an input method needs to be updated, the updated fused vocabulary may be downloaded by using the fused word library module.

In addition, in the foregoing process, the quantity of input times of the candidate word and the quantity of input times of the fused vocabulary may be obtained. A word frequency of a candidate word in the candidate word update result is obtained based on the quantity of input times of the candidate word and the quantity of input times of the fused vocabulary. Specifically, the word frequency of the candidate word = the quantity of input times of the candidate word/the quantity of input times of the fused vocabulary. A priority may be set for the candidate word in the vocabulary update result by using the word frequency. The higher the priority, the more easily the vocabulary is recommended to the user. So far, vocabulary update of the input method is completed. Because the updated fused vocabulary is shared by multiple input methods, it is more convenient for the system to perform vocabulary update on the input method corresponding to each screen. It should be noted that, in this embodiment of the present disclosure, the candidate word is used as an example, but the candidate word is not limiting, and other sharable information is included.

In the screen input control method in the present disclosure, when input is performed on multiple screens, an input method management service is managed by using a management service resource pool. A quantity of input method management services is dynamic rather than bound to a quantity of screens. When input needs to be performed on a screen, a corresponding input method management service becomes a used state, so as to enable an input method and newly add an unused input method management service. After input is completed, the input method management service is recycled, so that at least one unused input method management service is always maintained in the resource pool. When the system starts, not all input method management services need to be enabled, which reduces memory occupation and system lag, and improves user experience. In addition, setting selection may be further performed on different input methods, and a vocabulary update may be performed on input methods of multiple screens, so as to facilitate user use.

An embodiment of the present disclosure further provides a screen input control system, where the system includes a memory and a processor, the memory storing a computer program, and when the computer program is run, the processor being enabled to perform the foregoing screen input control method. An embodiment of the present disclosure further provides a vehicle, and the foregoing screen input control system is provided on the vehicle.

In the screen input control system and the vehicle of the present disclosure, multi-screen input is implemented by using the foregoing screen input control method. When input is performed on multiple screens, an input method management service is managed by using a management service resource pool. A quantity of input method management services is dynamic rather than bound to a quantity of screens. When input needs to be performed on a screen, a corresponding input method management service becomes a used state, so as to enable an input method and newly add an unused input method management service. After input is completed, the input method management service is recycled, so that at least one unused input method management service is always maintained in the resource pool. When the system starts, not all input method management services need to be enabled, which reduces memory occupation and system lag, and improves user experience. In addition, setting selection may be further performed on different input methods, and a vocabulary update is performed on input methods of multiple screens, so as to facilitate user use.

An embodiment of the present disclosure further provides a computer readable storage medium, where the computer readable storage medium stores a computer program, the computer program causing a processor to perform the foregoing screen input control method when being run by the processor.

Although example embodiments have been described herein with reference to accompanying drawings, it should be understood that the above example embodiments are only illustrative, and not intended to limit the scope of the present disclosure thereto. Various changes and modifications can be made by a person of ordinary skill in the art without departing from the scope and spirit of the present disclosure. All these changes and modifications are intended to be embraced in the scope of the present disclosure as defined in the appended claims.

A person of ordinary skill in the art may notice that the example units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each specific application, but it should not be considered that such an implementation goes beyond the scope of the present disclosure.

In the several embodiments provided in the present disclosure, it should be understood that the disclosed device and method may be implemented in another manner. For example, the described device embodiments are merely schematic. For example, the unit division is merely logical function division and may be other division in actual implementation. For example, multiple units or components may be combined or integrated into another device, or some features may be ignored or not performed.

Numerous specific details are set forth in the specification provided herein. However, it can be understood that, the embodiments of the present disclosure may be practiced without the specific details. In some examples, known methods, structures, and technologies are not disclosed in detail, so as not to mix up understanding on the specification.

Similarly, it should be understood that to simplify the present disclosure and help to understand one or more of disclosure aspects, in the descriptions of the example embodiments of the present disclosure, features of the present disclosure are sometimes grouped into a single embodiment or figure, or descriptions thereof. However, the method of the present disclosure should not be construed as reflecting the following intention: That is, the present disclosure for which protection is sought claims more features than those explicitly recorded in each claim. More definitely, as reflected in the corresponding claims, the inventiveness of the disclosure lies in resolving the corresponding technical problem using features less than all features of a single embodiment disclosed above. Therefore, the claims following the specific implementation are hereby expressly incorporated into the specific implementation, with each claim standing on its own as a separate embodiment of the present disclosure.

A person skilled in the art may understand that, all features disclosed in this specification (including the accompanying claims, abstract and drawings), and all processes or units of any method or device disclosed herein may be combined in any combination, unless features are mutually exclusive. Unless otherwise explicitly stated, each feature disclosed in this specification (including the accompanying claims, abstract and drawings) may be replaced with an alternative feature serving the same, equivalent or similar purpose.

In addition, a person skilled in the art can understand that, although some embodiments herein include some but not other features included in other embodiments, combinations of features of different embodiments are meant to be within the scope of the present disclosure and to form different embodiments. For example, in the claims, any one of the claimed embodiments may be used in any combination.

The component embodiments of the present disclosure may be implemented by using hardware, or may be implemented by using a software module running on one or more processors, or may be implemented by using a combination thereof. A person skilled in the art should understand that in practice, a microprocessor or a digital signal processor (DSP) may be used to implement some or all functions of some modules according to the embodiments of the present disclosure. The present disclosure may further be implemented as part or all of an in-vehicle system program (for example, a computer program and a computer program product) that is used to execute the methods described herein. Such a program for implementing the present disclosure may be stored in a computer readable medium, or may have one or more signal forms. Such signals may be downloaded from an Internet website, provided on carrier signals, or provided in any other form.

It should be noted that the above-mentioned embodiments illustrate rather than limit the present disclosure, and a person skilled in the art may devise alternative embodiments without departing from the scope of the appended claims. In the claims, any reference signs placed between parentheses shall not be construed as limiting the claims. The word "include" does not rule out presence of elements or steps not listed in the claims. The word "a/an" or "one" before the element does not rule out presence of multiple such elements. The present disclosure can be implemented by way of hardware including several different elements and an appropriately programmed computer. In the unit claims enumerating several in-vehicle systems, several of these in-vehicle systems may be specifically embodied by using a same hardware item. The use of the words such as "first", "second", "third", and the like does not denote any order. These words can be interpreted as names.

The foregoing descriptions are merely specific implementations of the present disclosure or descriptions of the specific implementations, but are not intended to limit the protection scope of the present disclosure. Any variation or replacement readily figured out by a person skilled in the art within the technical scope disclosed in the present disclosure shall fall within the protection scope of the present disclosure. The protection scope of the present disclosure shall be subject to the protection scope of the claims.

## Claims

1. A screen input control method, applied to a system comprising at least two screens, the method comprising:
creating a management service resource pool, the management service resource pool always comprising at least one unused input method management service; and
obtaining the unused input method management service from the management service resource pool when an input control of a screen is triggered, and allocating the unused input method management service to the screen, so as to enable an input method of the screen.

2. The method according to claim 1, after obtaining the unused input method management service from the management service resource pool when the input control of the screen is triggered, and allocating the unused input method management service to the screen, the method further comprising:
marking the input method management service as used; and
adding an unused input method management service to the management service resource pool to be used for a screen, in the at least two screens, on which a next input control is triggered.

3. The method according to claim 2, further comprising:
after input based on the input method is completed, re-marking the input method management service marked as used to unused, and recycling the input method management service into the management service resource pool.

4. The method according to claim 2, wherein enabling the input method of the screen comprises:
invoking the input method of the screen based on the input method management service marked as used, and transferring an input channel to the input method to enable the input method.

5. The method according to claim 4, before creating the management service resource pool, the method further comprising:
downloading an input method installation package and storing the input method installation package into the system; and
parsing the input method installation package by using a package management service, to obtain an input method parsed package corresponding to each screen, and allocating a different package name to each input method parsed package; and
invoking the input method of the screen based on the input method management service marked as used comprises: invoking an input method corresponding to a corresponding screen based on the package name.

6. The method according to claim 5, wherein when a screen is newly added to the system, the method further comprises:
parsing the input method installation package by using the package management service, to obtain an input method parsed package corresponding to the newly added screen, and allocating a new package name to the input method parsed package corresponding to the newly added screen.

7. The method according to claim 5, before the input based on the input method is completed, the method further comprising: performing a vocabulary update on the input method.

8. The method according to claim 7, wherein performing the vocabulary update on the input method comprises:
obtaining a candidate word of the input method;
obtaining a fused vocabulary from storage space shared by all screens; and
fusing the candidate word with the fused vocabulary to obtain a candidate word update result, the candidate word update result being stored into the storage space to update the fused vocabulary.

9. The method according to claim 8, wherein performing the vocabulary update on the input method further comprises:
obtaining a quantity of input times of the candidate word and a quantity of input times of the fused vocabulary;
obtaining a word frequency of a candidate word in the candidate word update result based on the quantity of input times of the candidate word and the quantity of input times of the fused vocabulary; and
setting a priority for the candidate word in the vocabulary update result based on the word frequency, different priorities corresponding to different recommendation sequences.

10. The method according to any one of claims 1 to 9, before enabling the input method, the method further comprising:
selecting an input method from at least two input methods based on user input to enable.

11. The method according to claim 10, wherein selecting the input method to enable comprises:
obtaining configuration information of the at least two input methods; and
selecting, based on the configuration information, an input method specified by the user input.

12. The method according to any one of claims 1 to 9 and 11, wherein the screen comprises a physical screen and/or a virtual screen, wherein the virtual screen comprises a projected screen and/or a shared screen.

13. A screen input control system, comprising a memory and a processor, the memory storing a computer program, and when the computer program is run, the processor being enabled to perform the screen input control method according to any one of claims 1 to 12.

14. A computer-readable storage medium, storing a computer program, and the computer program causing a processor to perform the screen input control method according to any one of claims 1 to 12 when being run by the processor.

15. A vehicle, provided with the screen input control system according to claim 13.
